# EUROPEAN PATENT APPLICATION

(11) **EP 0 787 633 A1**
(43) Date of publication of application: **06.08.1997**
(21) Application number: 96101530.2
(22) Date of filing: 02.02.1996
(51) Int. Cl.: B60R 22/26

(54) **Apparatus for arresting a safety belt lock which is displaceable with a vehicle seat**

(71) Applicant: ICSRD RÜCKHALTESYSTEME FÜR FAHRZEUGSICHERHEIT GmbH, 82234 Wessling (DE)
(72) Inventor: Specht, Martin, Dipl.-Ing. (FH), D-82340 Feldafing (DE); Gassner, Stephan, Dipl.-Ing. (FH), D-85259 Wiedenzhausen (DE)
(74) Representative: Maiwald, Walter, Dr. Dipl.-Chem.

(57) **Abstract**

An apparatus for arresting a safety belt lock 7 which is displaceable with a vehicle seat in the longitudinal direction of the vehicle, on a rail 3 which is fixed to the vehicle structure and which has a retaining profile 6 with which an arresting device 1 connected to the belt lock 7 can be brought into engagement, wherein the arresting device has a locking member 5 which is moved by a force which originates from the safety belt webbing 8 and which is transmitted to the locking member 5 by way of the belt lock 7, into its retaining position in which the locking member 5 engages into the retaining profile 6 of the rail 3.

## Description

The invention concerns an apparatus as set forth in the classifying portion of claim 1.

An apparatus of that kind which is known from DE 195 04 222 A1 provides that a three-point safety belt is associated with a displaceable seat squab. For the purposes of setting the optimum pelvic belt angles in any possible position of adjustment of the seat squab the belt lock is also displaced in a rail which is fixed to the vehicle structure. The apparatus also has an arresting mechanism with which the belt lock can be coupled to the rail.

The problem of the present invention is to provide an apparatus of the kind set forth in the opening part of this specification, which ensures secure anchoring of the belt lock on the vehicle structure, in particular when there are high forces which are transmitted by way of the safety belt webbing.

In accordance with the invention that problem is solved by the characterising features of claim 1.

While the apparatus disclosed in DE 195 04 222 A1 provides that the belt lock carrier is arrested in the respective position of the seat and the arresting action is released by a lever when the seat is displaced, the invention provides that coupling of the belt lock to the rail is effected by bans of the arresting device when a force is transmitted from the safety belt webbing by way of the belt lock to the locking member, which force moves the locking member into its retaining position in which it comes into engagement with the retaining profile on the rail. Admittedly, in the case of an anchorage fitment, which is displaceable with the vehicle seat, for a shoulder belt in a height adjusting device (DE 37 13 137 A1), the force exerted by the belt on the fixing location of the anchorage fitment when the belt is tightened also moves a locking member into a retaining position on a height adjuster rail, but that arrangement does not involve an arresting action in the respectively occurring position in normal operation in the respective displacement of the seat, as is described in DE 195 04 222 A1.

Preferably the locking member is in the form of a double-sided lever, wherein the belt lock is at one side of the lever and a retaining element which engages into the retaining profile of the rail in the retaining position is on the other side of the lever of the locking member. In the normal situation the locking member is held by a spring in a rest position in which it is out of engagement with the retaining profile of the rail.

An entrainment member serves for transmitting the adjusting movement of the vehicle seat, the entrainment member transmitting the movement of the seat to the slider to which the belt lock is fixed by means of a belt lock carrier. Preferably the apparatus according to the invention is used in relation to a vehicle seat which can be in the form of an individual seat or a component of a back bench seat.

The invention will be described in greater detail by means of an embodiment with reference to the Figures in which:
Figure 1 is a side view of an embodiment,
Figure 2 is a plan view of the embodiment in Figure 1,
Figure 3 is a view in section taken along section line B-B in Figure 1,
Figure 4 is a view in section taken along section line C-C in Figure 1, and
Figure 5 is a view in section taken along section line A-A in Figure 2.

In the embodiment illustrated in the Figures a safety belt lock 7 is fixed to a fixing point 17 on a lock holder 16. The lock holder 16 is fixed to an arresting device 1 at a fixing location 11 by means of a fixing screw 21. The arresting device 1 is mounted slidably along a rail 3 which is fixed to the vehicle structure, in particular to the floor panel.

The arresting device 1 is connected to a vehicle seat 4 by way of an entrainment member 15. The arresting device therefore also moves with the adjusting movement of the seat 4. In that situation it is displaced along the rail 3.

The arresting device 1 has a slider 2. A locking member 5 is mounted on the slider 2 pivotably about an axis 9. In normal operation the locking member 5 is held in a rest position by a spring 10 which engages one lever arm (first lever arm 12) of the locking member 5 which acts as a double-sided lever. In the rest position the locking member 5 is out of engagement with a retaining profile 6 in the form of holes in the rail 3. In the installed condition the retaining profile 6 is disposed at the underside of the rail 3.

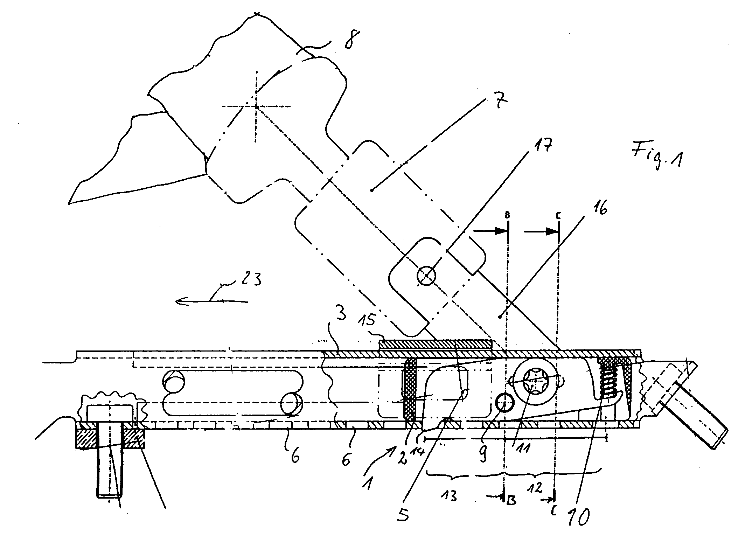

Provided on a second lever arm 13 of the locking member 5 is a retaining element 14 which, in the retaining position of the locking member 5 (Figure 1), engages into one of the holes of the retaining profile 6.

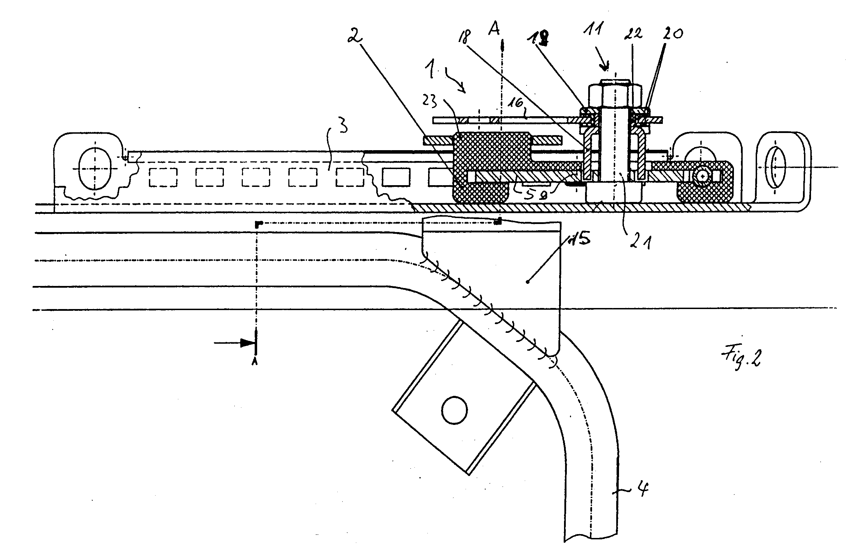

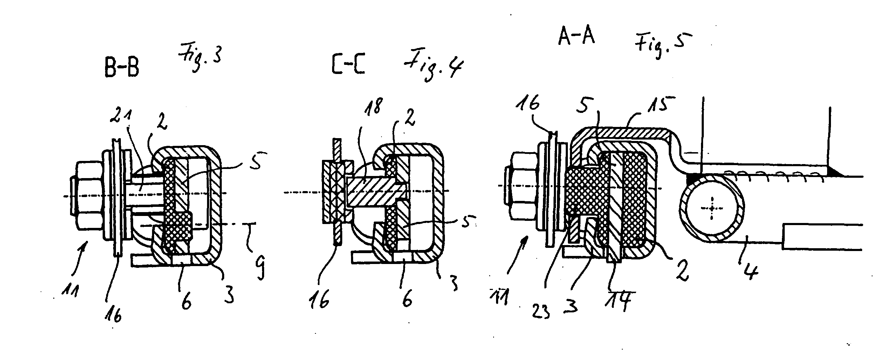

The lock holder 16 is held at the desired spacing from the arresting device 1 by a spacer 18. A support or shim washer 19, mounting washers 20 and a spacer sleeve 22 are provided for suitably fixing the lock holder 16. As can be seen in particular from Figure 4 the spacer 18 is supported against the locking member 5.

When the seat 4 is displaced in normal operation the arresting device 1 with the belt lock 7 fixed thereto is also displaced along the rail 3 by way of the entrainment member 15 which engages the slider 2 at a connecting location 23. The locking member 5 is held by the spring 10 in its rest position in which it is out of engagement with the retaining profile 6.

When forces are transmitted to the locking member 5 at the fixing location 11 by way of a safety belt webbing 8 which is connected to the belt lock 7, the locking member 5 is pivoted about the axis 9 against the force of the spring 10 so that it comes into the retaining position shown in Figure 1. In that situation the retaining element 14 engages into one of the holes of the retaining profile 6.

In that retaining position the arrangement ensures that the belt lock 7 is not torn out of its anchorage when high forces are operative. The belt lock remains firmly fixed to the vehicle structure even in the case of a high tensile loading which is transmitted to the vehicle structure so that the retaining function of the safety belt webbing 8 is still guaranteed. Transmission of the forces originating from the belt webbing occurs by way of the fixing location 11 (fixing screw 21) to the locking member 5 and from there by way of the rail 3 to the vehicle structure.

The slider 2 can therefore comprise a light material, for example plastic material. The locking member 5 is made from a high-strength material.

In the retaining position the locking member 5 bears at both lever sides thereof against the inside of the rail 3 over a relatively great length so as to ensure forces are transmitted over a large area from the locking member 5 to the rail 3, as shown in Figure 1.

In the illustrated embodiment, as considered in the direction of travel of the vehicle (arrow 23), the retaining nose 14 is disposed in front of the axis 9 and the axis 9 is disposed in front of the fixing location 11 of the lock 7. In particular in the retaining position (Figure 1) the fixing location 11 is above the axis 9 while the retaining element 14 engages into the retaining profile 6, which is at the lowest position, of the rail 3.

It is also possible for the retaining profile to be disposed at the upward side of the rail 3 and for the locking member 5 to be in the form of a single-sided lever, in which case the fixing location 11 is between the retaining element 14 and the axis 9. In that case the spring 10 bears against the underside of the slider 2. In the illustrated embodiment the spring 10 bears against the top side of the slider 2.

## Claims

1. Apparatus for arresting a safety belt lock which is displaceable with a vehicle seat in the longitudinal direction of the vehicle on a rail which is fixed to the vehicle structure and which has a retaining profile with which an arresting device connected to the belt lock can be brought into engagement, characterised in that the arresting device (1) has a slider (2) which is displaceable in the rail (3) with the vehicle seat (4), that mounted on the slider (2) is a locking member (5) which in its retaining position is lockable to the retaining profile (6) of the rail (2), that the belt lock (7) is fixed to the slider (2) and that the locking member (5) is moved into its retaining position when a force is transmitted from the safety belt webbing (8) by way of the belt lock (7) to the locking member (5).

2. Apparatus according to claim 1 characterised in that the locking member (5) is movable into the retaining position against the force of a spring (10).

3. Apparatus according to claim 1 or claim 2 characterised in that the locking member (5) is pivotable about an axis (9) into its retaining position.

4. Apparatus according to one of claims 1 to 3 characterised in that the belt lock (7) is fixed on the slider (2) movably under the influence of the force exerted by the belt webbing (8) and that said movement can be transmitted to the locking member (5) for moving the locking member into its retaining position.

5. Apparatus according to one of claims 1 to 4 characterised in that the force exerted by the belt webbing (8) by way of the belt lock (7) produces at the locking member (5) a turning moment by which the locking member (5) is movable into the retaining position.

6. Apparatus according to one of claims 1 to 5 characterised in that the belt lock (7) is fixed to the locking member (5) in a fixing location (11).

7. Apparatus according to one of clams 1 to 6 characterised in that the locking member (5) which is pivotable about the axis (9) is in the form of a double-sided lever, the fixing location (11) of the belt lock (7) being at the first lever side (12) of the double-sided lever and a retaining element (14) which can be brought into engagement with the retaining profile of the rail being disposed at the second lever side (13).

8. Apparatus according to one of claims 1 to 7 characterised in that the spring (10) engages the first lever side (12).

9. Apparatus according to one of claims 1 to 8 characterised in that in the direction of travel the retaining element (14) is in front of the axis (9) of the locking member (5) and the fixing location (11) of the belt lock (7).

10. Apparatus according to one of claims 1 to 9 characterised in that the retaining profile (6) is at the underside of the rail (3).

11. Apparatus according to one of claims 1 to 10 characterised in that connected to the vehicle seat (4) is an entrainment member (15) which transmits the seat displacement to the slider (2).

12. Apparatus according to one of claims 1 to 11 characterised in that the vehicle seat (4) is a back seat in the vehicle.
